# EUROPEAN PATENT APPLICATION

(11) **EP 0 962 126 A1**
(43) Date of publication of application: **08.12.1999**
(21) Application number: 99201738.4
(22) Date of filing: 01.06.1999
(51) Int. Cl.: A01B 79/00, A01B 63/00

(54) **A soil working machine and measuring means for determining the current local soil condition, the measuring means being adapted for use in said machine**

(30) Priority: 05.06.1998 NL 1009322
(71) Applicant: MAASLAND N.V., 3155 PD Maasland (NL)
(72) Inventor: Van den Berg, Karel, 2971 BR Bleskensgraaf (NL); Bom, Cornelis Johannes Gerardus, 3181 VC Rozenburg (NL); Van der Lely, Alexander, 3065 NA Rotterdam (NL)
(74) Representative: Corten, Maurice Jean F.M.

(57) **Abstract**

A soil working machine is provided with measuring means (4 - 7; 8-11; 4, 12 - 14; 15 - 19; 4, 20, 21) for determining the current local soil condition. In this manner the soil treatment can be continuously controlled and optimized. The measuring means (4 - 7; 8 - 11; 4, 12 - 14; 15 - 19; 4, 20, 21) comprise a measuring element (4; 8; 4, 12; 15) which is adapted to be moved during a soil treatment across the soil or at least partially through the soil, substantially in the direction of travel (V). The measuring element (4; 8; 4, 12; 15) is fastened to the soil working machine in such a manner that at least one end of the measuring element (4; 8; 4, 12; 15) is capable of deviating both in a direction extending in the vertical plane through the direction of travel (V) and in a direction extending in the plane defined by the measuring element (4; 8; 4, 12; 15) and a horizontal line perpendicular to the direction of travel (V). In this way the crumbling of the soil can be measured.

## Description

The invention relates to a soil working machine according to the preamble of claim 1. The invention further relates to measuring means for determining the current local soil condition, the measuring means being adapted for use in such a soil working machine.

The invention has for its object to provide an improved and more optimally operating soil working machine. According to the invention this is achieved by the measures indicated in the characterizing part of claim 1. With the aid of the measuring means for determining the current local soil condition the soil treatment can be continuously controlled and optimized.

According to an inventive feature, the measuring means comprise a measuring element which is suitable for feeling the soil substantially in the direction of travel. This feeling can be effected by moving the measuring element partially through the soil or across the surface of the soil. According to a further inventive feature, the measuring element is adapted to be moved at least partially through the soil substantially in the direction of travel. As a result of this a reliable measurement can be obtained in a simple manner. According to again another inventive feature, the measuring element is adapted to be moved across the surface of the soil substantially in the direction of travel. This embodiment has a low susceptibility to wear and is accurate. According to a further inventive feature, the measuring element is adapted to be moved across the soil in a trailing manner substantially in the direction of travel.

In accordance with a further inventive feature, the measuring element is fastened to the soil working machine in such a manner that at least one end of the measuring element is capable of deviating from a reference position. According to a still further inventive feature, the measuring element is provided with readjusting means for keeping the measuring element in its reference position and/or for bringing it into said position. According to again another inventive feature, the measuring element is fastened to the soil working machine in such a manner that at least one end of the measuring element is capable of deviating in a random direction from a reference position. According to a further inventive feature, the measuring element is fastened to the soil working machine in such a manner that at least one end of the measuring element is capable of deviating, from a reference position, in a direction extending substantially in the vertical plane through the direction of travel. In this manner e.g. the working depth of treated soil can be determined. According to a further inventive feature, the measuring element is fastened to the soil working machine in such a manner that at least one end of the measuring element is capable of deviating from a reference position in a direction extending substantially in the plane defined by the measuring element and a horizontal line perpendicular to the direction of travel. In this manner the crumbling of the soil can be measured.

In accordance with a further inventive feature, the measuring element comprises at least one pin which is fastened to the soil working machine in such a manner that the pin is moved through or across the soil in the direction of travel. According to a still further inventive feature, the measuring means comprise at least one clinometer, at least one pressure gauge, at least one spring or strain gauge, at least one ball joint or at least one optical sensor.

According to still another inventive feature, the measuring element is fastened to the soil working machine in a resilient manner. According to a further inventive feature, the spring force of the resilient fastening, and hence the measuring range of the measuring element, is adjustable on the basis of the composition of the soil and/or the driving speed of the soil working machine and/or a previous soil treatment. As a result of this the measuring element can be used in very divergent types of soil and conditions.

In accordance with a further inventive feature, the soil working machine is provided with a pushing element which, seen in the direction of travel, is disposed before the measuring element. According to still another inventive feature, the measuring element is fastened to the soil working machine in a hinging and/or a resilient manner so as to be able to deviate both in a direction extending in the vertical plane through the direction of travel and in a direction extending in the plane defined by the measuring element and a horizontal line perpendicular to the direction of travel. In this way there is realized a simple and cheap, but accurate measuring device for measuring the crumbling of the soil.

According to still another inventive feature, the measuring element is provided with a transverse pin which is fastened to the pin in a direction perpendicular to the direction of travel and substantially horizontally. This results in an accurate measurement of the crumbling. According to a further inventive feature, the measuring element comprises two parallel pins which are fastened to a cross piece extending horizontally perpendicular to the direction of travel. In this manner the measurement in the direction of travel is hardly affected, if at all, by the measurement perpendicular to the direction of travel.

According to a further inventive feature, the measuring means are connected with means determining the current driving speed of the soil working machine. According to a further inventive feature, the soil working machine comprises a control system, connected with the measuring means, for automatically controlling the number of revolutions and/or the working depth of the soil treatment and/or the driving speed of the soil working machine, on the basis of data generated by the measuring means regarding the current local soil condition. In this manner the soil treatment can be optimized.

In accordance with another inventive feature, the soil working machine is provided with means for determining the position for establishing the current position of the soil working machine during operation. According to a further inventive feature, the means for determining the position comprise a navigation system, such as e.g. GPS, DGPS, Lorean, dead reckoning, or a combination of such systems. According to still another inventive feature, the soil working machine is provided with a storage medium, connected with the measuring means and the means for determining the position, which is suitable for storage of data generated by the measuring means regarding the soil condition and data generated by the means for determining the position regarding the position of the soil working machine. According to again another inventive feature, the soil working machine is provided with a processing unit, connected with the measuring means and the means for determining the position, which is suitable for processing data generated by the measuring means regarding the soil condition and data generated by the means for determining the position regarding the position of the soil working machine into a soil condition map of the treated surface.

The invention will now be explained in further detail with reference to the accompanying drawings.
Figure 1 is a schematic side view of a first embodiment of the measuring means according to the invention;
Figure 2 is a schematic side view of a second embodiment of the measuring means according to the invention;
Figure 3 is a schematic side view of a third embodiment of the measuring means according to the invention;
Figure 4 is a schematic rear view of the measuring means according to Figure 3 in the direction of the arrow IV;
Figure 5 is a schematic side view of a fourth embodiment of the measuring means according to the invention;
Figure 6 is a schematic plan view of the measuring means according to Figure 5 in the direction of the arrow VI, and
Figure 7 is a schematic side view of a fifth embodiment of the measuring means according to the invention.

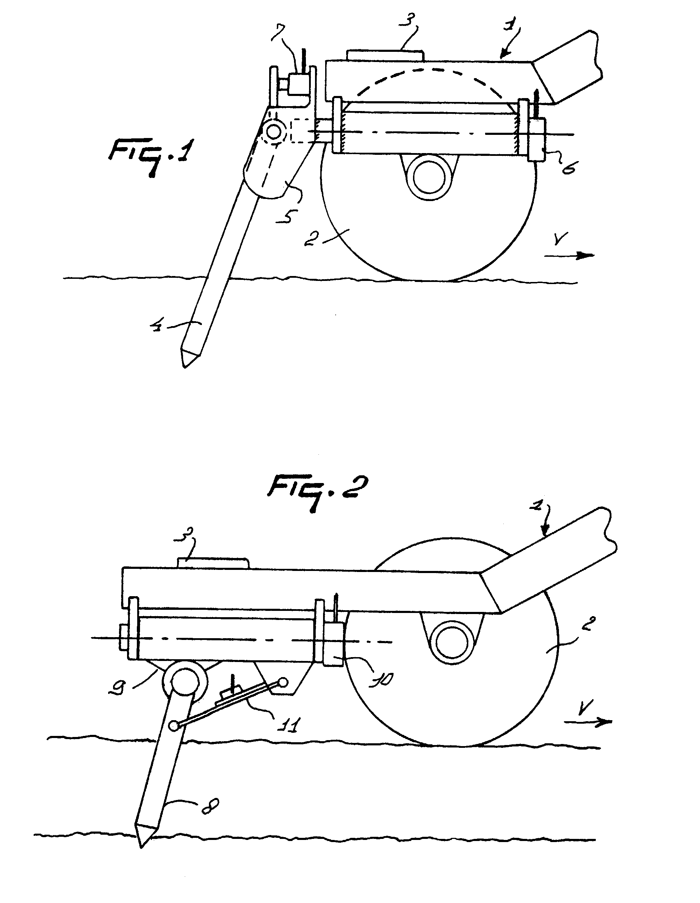

Figure 1 shows a schematic side view of a first embodiment of the measuring means according to the invention. A frame 1 is fastened to a soil working machine (preferably to the rear side thereof) and comprises one or more wheels or a pushing roller 2. The frame may be provided with a calibrating element, such as e.g. a level 3. To the frame 1 there is further fitted a measuring element 4 which is capable of deviating, from a (e.g. oblique) reference position, both in the vertical plane through the direction of travel (indicated by the arrow V) and in a direction extending in the plane defined by the measuring element and a horizontal line perpendicular to the direction of travel V. The measuring element 4 is designed as a pin extending substantially obliquely into the soil in a trailing manner and is adapted to be moved through the soil, substantially in the direction of travel V, during a soil treatment. By means of a suspension element 5 the measuring element 4 is fastened to a clinometer 6 that is fitted to the frame 1. A deviation of the measuring element 4 in a direction extending in the plane defined by the measuring element 4 and a horizontal line perpendicular to the direction of travel V (i.e. a deviation perpendicular to the plane in the drawing) can be measured by the clinometer 6. Furthermore the measuring element 4 is disposed in the suspension element 5 in a hinging manner, the arrangement being such that a deviation is possible in a direction extending in the vertical plane through the direction of travel V (i.e. a deviation in the plane of the drawing), which deviation can be measured by means of a pressure gauge 7 fitted to the suspension element 5.

The measuring element 4 may be provided with readjusting means for keeping the measuring element 4 in the direction(s) of its deviation in its reference position and/or for bringing it into said position. In the exemplary embodiment the measuring element 4 is fastened to the suspension element 5 of the soil working machine so as to be resilient in two directions. The spring force of the resilient fastening, and hence the measuring range of the measuring element 4, is preferably adjustable on the basis of the composition of the soil and/or the driving speed of the soil working machine and/or a previous soil treatment. Seen in the direction of travel V, the pushing roller 2 or a similar pushing element is disposed before the measuring element 4.

The measuring means are connected with means determining the current driving speed of the soil working machine. On the basis of the composition of the soil, the current driving speed and the measured deviations of the measuring element 4 it is possible to determine the soil condition. In this situation the deviation is a measure for the crumbling of the soil.

In the embodiment shown the measuring means are capable of deviating in two directions, making it possible to determine the position and the dimensions of clods in the soil, so that an accurate measuring device for the crumbling of the soil is realized. In accordance with the invention, it is also possible to limit the freedom of movement of the measuring means to only one direction, which provides a simpler measuring device for the crumbling of the soil. It is also possible to fasten the measuring means to the front of the soil working machine, seen in the direction of travel V, e.g. for checking the quality of a previous soil treatment and for continuously controlling the soil working machine, on the basis thereof, for the subsequent treatment.

The soil working machine is preferably provided with a control system (non-shown and known per se), connected with the measuring means, for automatically controlling the number of revolutions and/or the working depth of the soil treatment and/or the driving speed of the soil working machine on the basis of data generated by the measuring means regarding the current local soil condition. In this manner the soil treatment can be continuously controlled and optimized.

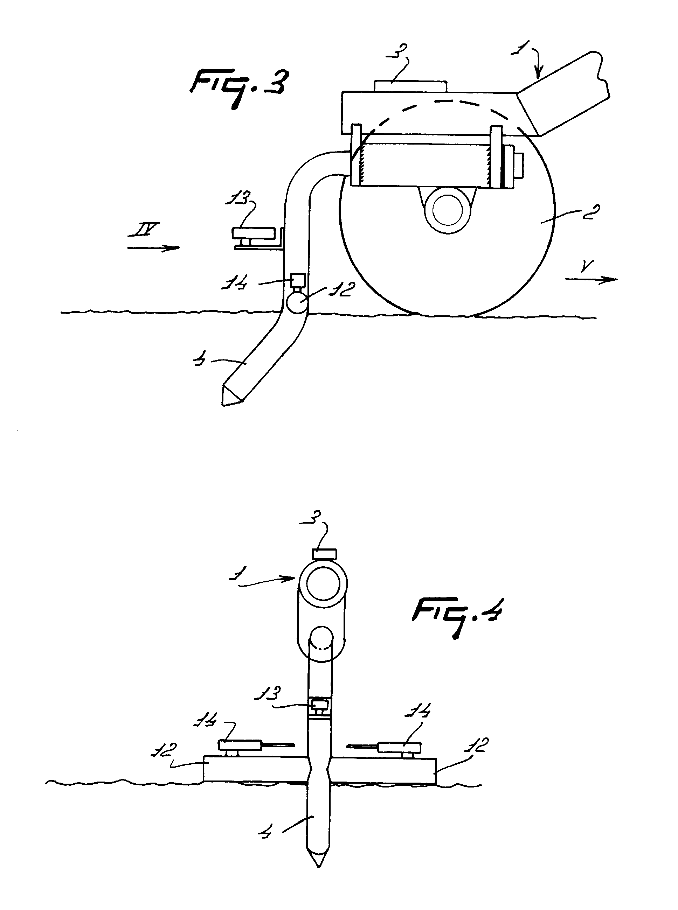

Figure 2 is a schematic side view of a second embodiment of the measuring means according to the invention. In this situation the frame 1 is provided with a measuring element 8 designed as a shorter one, which measuring element 8 is also capable of deviating both in the plane of the drawing and perpendicular thereto from a reference position. By means of a suspension element 9 the measuring element 8 is fastened to a clinometer 10 that is fitted to the frame 1. A deviation of the measuring element 8 in the horizontal direction perpendicular to the direction of travel can be measured by the clinometer 10. Furthermore the measuring element 8 is disposed in the suspension element 9 in a hinging manner, the arrangement being such that a deviation is possible in the vertical plane through the direction of travel V, which deviation can be measured by means of a flexible element 11, such as e.g. a spring or a strain gauge, disposed between the measuring element 8 and the clinometer 10. As shown schematically in Figure 2, the soil has a relatively hard under layer and an upper layer that is somewhat loosened by a soil treatment and is less hard. By means of the measuring element 8 it is possible to determine in a simple manner to what depth the soil has been worked.

Also in this situation the measuring element 8 is fastened to the suspension element 9 of the soil working machine so as to be resilient in two directions, the spring force of the resilient fastening, and hence the measuring range of the measuring element 8, being adjustable on the basis of the composition of the soil and/or the driving speed of the soil working machine and/or a previous soil treatment. The soil condition is determined again on the basis of the composition of the soil, the current driving speed and the measured deviations of the measuring element 8. By means of a control system, connected with the measuring means, for automatically controlling the number of revolutions and/or the working depth of the soil treatment and/or the driving speed of the soil working machine on the basis of data generated by the measuring means regarding the current local soil condition, the soil treatment can be continuously controlled and optimized.

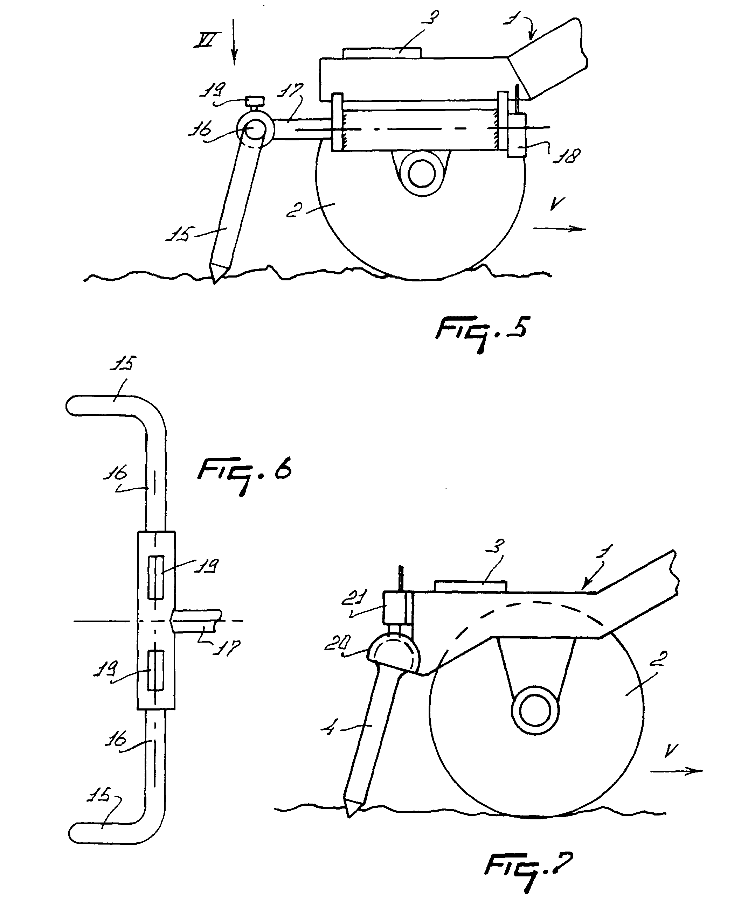

Figures 3 and 4 are a schematic side view, a schematic rear view respectively of a third embodiment of the measuring means according to the invention. This third embodiment corresponds to a large extent to the first embodiment of Figure 1, but differs in that the measuring element is provided with a transverse pin 12 which is fastened to the pin 4 in a direction perpendicular to the direction of travel and substantially horizontally. Further the pin 4 is now directly fitted to the frame 1 so as to be resilient in two directions and clinometers 13, 14 are fitted to the measuring element for measuring the deviations in the vertical plane through the direction of travel V and in the substantially horizontal direction perpendicular thereto.

The transverse pin 12 has the advantage that upon a deviation of the measuring element perpendicular to the plane of the drawing, the resistance in the direction of travel V remains substantially unchanged, so that measurement of crumbling is not affected and can be carried out accurately.

Figure 5 is a schematic side view of a fourth embodiment of the measuring means according to the invention and Figure 6 is a schematic plan view of the measuring means according to Figure 5 in the direction of the arrow VI. In this situation the measuring element comprises two parallel pins 15 which are fastened to a cross piece 16 extending in horizontal direction perpendicular to the direction of travel. Also in this case the measuring element is fastened so as to be resilient relative to a reference position, this time with the aid of a suspension element 17 which is bearing-supported in a clinometer 18 that is connected with the frame 1. To the suspension element 17 clinometers 19 are fastened for the measurement of crumbling, in which clinometers 19 the cross piece 16 with the pins 15 is rotatably bearing-supported.

Also in this construction upon a deviation of the measuring element perpendicular to the plane of the drawing, the resistance in the direction of travel V remains almost unchanged, so that the measurement of crumbling is not affected and can be carried out accurately. When in the case of measurement of crumbling the parallel pins 15 deviate in their plane, one of the pins 15 will pass into the soil more deeply, whereas the other pin will pass into the soil less deeply.

Figure 7 is a schematic side view of a fifth embodiment of the measuring means according to the invention. In this situation the measuring element 4 is capable of deviating from a reference position in a random direction, because it is fastened to the frame 1 by means of a ball joint 20. Above the ball joint 20 there is arranged an optical sensor 21 by means of which the deviations of the measuring pin 4 can be recorded. In a non-shown embodiment the end of the measuring pin 4 is designed as a blunt or a flat one.

In a preferred embodiment the soil working machine is provided with means (non-shown, known per se) for determining the position for establishing the current position of the soil working machine during operation. These means for determining the position may comprise a navigation system, such as e.g. GPS, DGPS, Lorean, dead reckoning, or a combination of such systems. The soil working machine may be provided with a storage medium, connected with the measuring means and the means for determining the position, which is suitable for storage of data generated by the measuring means regarding the soil condition and data generated by the means for determining the position regarding the position of the soil working machine. The soil working machine is preferably provided with a processing unit, connected with the measuring means and the means for determining the position, which is suitable for processing the data generated by the measuring means regarding the soil condition and the data generated by the means for determining the position regarding the position of the soil working machine into a soil condition map of the treated surface.

## Claims

1. A soil working machine, characterized in that this soil working machine is provided with measuring means (4 - 7; 8 - 11; 4, 12 - 14; 15 - 19; 4, 20, 21) for determining the current local soil condition.

2. A soil working machine as claimed in claim 1, characterized in that the measuring means (4 - 7; 8 - 11; 4, 12 - 14; 15 - 19; 4, 20, 21) comprise a measuring element (4; 8; 4, 12; 15) which is suitable for feeling the soil substantially in the direction of travel (V).

3. A soil working machine as claimed in claim 2, characterized in that the measuring element (4; 8; 4, 12; 15) is adapted to be moved at least partially through the soil substantially in the direction of travel (V).

4. A soil working machine as claimed in claim 2, characterized in that the measuring element (4; 8; 4, 12; 15) is adapted to be moved across the surface of the soil substantially in the direction of travel (V).

5. A soil working machine as claimed in claim 4, characterized in that the measuring element (4; 8; 4, 12; 15) is adapted to be moved across the soil in a trailing manner substantially in the direction of travel (V).

6. A soil working machine as claimed in any one of claims 2 - 5, characterized in that the measuring element (4; 8; 4, 12; 15) is fastened to the soil working machine in such a manner that at least one end of the measuring element (4; 8; 4, 12; 15) is capable of deviating from a reference position.

7. A soil working machine as claimed in claim 6, characterized in that the measuring element (4; 8; 4, 12; 15) is provided with readjusting means for keeping the measuring element (4; 8; 4, 12; 15) in its reference position and/or for bringing it into said position.

8. A soil working machine as claimed in any one of claims 2 - 7, characterized in that the measuring element (4; 8; 4, 12; 15) is fastened to the soil working machine in such a manner that at least one end of the measuring element (4; 8; 4, 12; 15) is capable of deviating in a random direction from a reference position.

9. A soil working machine as claimed in any one of claims 2 - 8, characterized in that the measuring element (4; 8; 4, 12; 15) is fastened to the soil working machine in such a manner that at least one end of the measuring element (4; 8; 4, 12; 15) is capable of deviating, from a reference position, in a direction extending substantially in the vertical plane through the direction of travel (V).

10. A soil working machine as claimed in any one of claims 2 - 9, characterized in that the measuring element (4; 8; 4, 12; 15) is fastened to the soil working machine in such a manner that at least one end of the measuring element (4; 8; 4, 12; 15) is capable of deviating, from a reference position, in a direction extending substantially in the plane defined by the measuring element (4; 8; 4, 12; 15) and a horizontal line perpendicular to the direction of travel (V).

11. A soil working machine as claimed in any one of claims 2 - 10, characterized in that the measuring element (4; 8; 4, 12; 15) comprises at least one pin (4; 8; 15) which is fastened to the soil working machine in such a manner that the pin (4; 8; 15) is moved through or across the soil in the direction of travel (V).

12. A soil working machine as claimed in any one of claims 1 - 11, characterized in that the measuring means (4 - 7; 8 - 11; 4, 12 - 14; 15 - 19; 4, 20, 21) comprise at least one clinometer (6; 10; 13, 14; 18, 19).

13. A soil working machine as claimed in any one of claims 1 - 12, characterized in that the measuring means (4 - 7; 8 - 11; 4, 12 - 14; 15 - 19; 4, 20, 21) comprise at least one pressure gauge (7).

14. A soil working machine as claimed in any one of claims 1 - 13, characterized in that the measuring means (4 - 7; 8 - 11; 4, 12 - 14; 15 - 19; 4, 20, 21) comprise at least one spring or strain gauge (11).

15. A soil working machine as claimed in any one of claims 1 - 14, characterized in that the measuring means (4 - 7; 8 - 11; 4, 12 - 14; 15 - 19; 4, 20, 21) comprise at least one ball joint (20).

16. A soil working machine as claimed in any one of claims 1 - 15, characterized in that the measuring means (4 - 7; 8 - 11; 4, 12 - 14; 15 - 19; 4, 20, 21) comprise at least one optical sensor (21).

17. A soil working machine as claimed in any one of claims 1 - 16, characterized in that the measuring element (4; 8; 4, 12; 15) is fastened to the soil working machine in a resilient manner.

18. A soil working machine as claimed in claim 17, characterized in that the spring force of the resilient fastening, and hence the measuring range of the measuring element (4; 8; 4, 12; 15), is adjustable on the basis of the composition of the soil and/or the driving speed of the soil working machine and/or a previous soil treatment.

19. A soil working machine as claimed in any one of claims 1 - 18, characterized in that the soil working machine is provided with a pushing element (2).

20. A soil working machine as claimed in claim 19, characterized in that the pushing element (2) is disposed before the measuring element (4; 8; 4, 12; 15) seen in the direction of travel (V).

21. A soil working machine as claimed in any one of claims 2 - 20, characterized in that the measuring element (4; 8; 4, 12; 15) is fastened to the soil working machine in a hinging and/or a resilient manner so as to be able to deviate both in a direction extending in the vertical plane through the direction of travel (V) and in a direction extending in the plane defined by the measuring element (4; 8; 4, 12; 15) and a horizontal line perpendicular to the direction of travel (V).

22. A soil working machine as claimed in any one of claims 11 - 21, characterized in that the measuring element (4; 8; 4, 12; 15) is provided with a transverse pin (12) which is fastened to the pin (4; 8; 15) in a direction perpendicular to the direction of travel (V) and substantially horizontally.

23. A soil working machine as claimed in any one of claims 11 - 22, characterized in that the measuring element (4; 8; 4, 12; 15) comprises two parallel pins (15) which are fastened to a cross piece (16) extending horizontally perpendicular to the direction of travel (V).

24. A soil working machine as claimed in any one of claims 1 - 23, characterized in that the measuring means (4 - 7; 8 - 11; 4, 12 - 14; 15 - 19; 4, 20, 21) are connected with means determining the current driving speed of the soil working machine.

25. A soil working machine as claimed in any one of claims 1 - 24, characterized in that the soil working machine comprises a control system, connected with the measuring means (4 - 7; 8 - 11; 4, 12 - 14; 15 - 19; 4, 20, 21), for automatically controlling the number of revolutions and/or the working depth of the soil treatment and/or the driving speed of the soil working machine, on the basis of data generated by the measuring means (4 - 7; 8 - 11; 4, 12 - 14; 15 - 19; 4, 20, 21) regarding the current local soil condition.

26. A soil working machine as claimed in any one of claims 1 - 25, characterized in that the soil working machine is provided with means for determining the position for establishing the current position of the soil working machine during operation.

27. A soil working machine as claimed in claim 26, characterized in that the means for determining the position comprise a navigation system, such as e.g. GPS, DGPS, Lorean, dead reckoning, or a combination of such systems.

28. A soil working machine as claimed in any one of claims 26 and 27, characterized in that the soil working machine is provided with a storage medium, connected with the measuring means (4 - 7; 8 - 11; 4, 12 - 14; 15 - 19; 4, 20, 21) and the means for determining the position, which is suitable for storage of data generated by the measuring means (4 - 7; 8 - 11; 4, 12 - 14; 15 - 19; 4, 20, 21) regarding the soil condition and data generated by the means for determining the position regarding the position of the soil working machine.

29. A soil working machine as claimed in any one of claims 26 - 28, characterized in that the soil working machine is provided with a processing unit, connected with the measuring means (4 - 7; 8 - 11; 4, 12 - 14; 15 - 19; 4, 20, 21) and the means for determining the position, which is suitable for processing data generated by the measuring means (4 - 7; 8 - 11; 4, 12 - 14; 15 - 19; 4, 20, 21) regarding the soil condition and data generated by the means for determining the position regarding the position of the soil working machine into a soil condition map of the treated surface.

30. Measuring means for determining the current local soil condition, the measuring means being adapted for use in a soil working machine as claimed in any one of claims 1 - 29.
